# EUROPEAN PATENT APPLICATION

(11) **EP 2 489 890 A1**
(43) Date of publication of application: **22.08.2012**
(21) Application number: 11155235.2
(22) Date of filing: 21.02.2011
(51) Int. Cl.: F16C 25/08, F16C 33/61, F16C 19/16, F16C 27/06

(54) **Pre-stressed rolling bearing, notably for steering column.**

(71) Applicant: Aktiebolaget SKF, 415 50 Göteborg (SE)
(72) Inventor: Jansen, Daniel, 37000 Tours (FR); Montboeuf, Bruno, 37390 Cerelles (FR); Bussit, Sylvain, 37380 Monnaie (FR)
(74) Representative: Casalonga, Axel

(57) **Abstract**

The pre-stressed rolling bearing comprises an inner ring 1, an outer ring 2 and a row of rolling elements 3 disposed between the rings, at least one of said rings comprising a housing 5, two raceways 6, 7 mounted in the housing and in contact with said housing, and at least a pre-stressing element 8 mounted in axial contact with a lateral flange 5b of the housing and exerting a force on one of the raceways. The pre-stressing element 8 further comprises at least a stiffening element 9 comprising a radial portion 10 axially disposed between the pre-stressing element 8 and the associated raceway 6, and an axial portion 11 connected to the radial portion and extending towards the lateral flange 5b of the housing.

## Description

The present invention relates to pre-stressed rolling bearings, having an inner ring and an outer ring with one or more rows of rolling elements, for example balls. The rolling bearings may be, for example, those used in a steering column for automotive vehicles, industrial electric motors or electromechanical actuators.

A steering column of an automotive vehicle generally comprises an inner tube or shaft having one of its end portions linked with a steering wheel actuated by the driver and the other of its end portions linked to mechanical elements, such as a toothed rack. The shaft of the steering column is mounted inside an outer tube via two rolling bearing assemblies. Each of said rolling bearing assemblies generally comprises a rolling bearing, for example a ball bearing, with an outer ring and an inner ring between which the rolling elements or the balls are mounted and maintained by a cage element.

European patent application EP-A1-1 956 254 (SKF) discloses a pre-stressed rolling bearing comprising an inner ring, an outer ring provided with a housing and two annular wires arranged in said housing to form raceways, a row of balls disposed between said wires and the inner ring, and a pre-stressing element made from elastic material and axially disposed between a first radial flange of the housing and one of the wires. A second radial flange of the housing is pressed against the other wire so as to exert an axial compression force on the pre-stressing element and to preload the rolling bearing both axially and radially.

With such a preload rolling bearing, the elastic pre-stressing element is deformed by the associated wire and the material of said pre-stressing element may creep or flow axially towards the balls and interferes with said balls. Otherwise, the stiffness of such a pre-stressed rolling bearing may be insufficient in some cases.

One aim of the present invention is to overcome these drawbacks.

It is a particular object of the present invention to provide a pre-stressed rolling bearing which is simple to manufacture and to assembly, economic, while guaranteeing an improved stiffness and an enhanced dislocation resistance.

In one embodiment, the pre-stressed rolling bearing comprises an inner ring, an outer ring and a row of rolling elements disposed between the rings, at least one of said rings comprising a housing, two raceways mounted in the housing and in contact with said housing, and at least a pre-stressing element mounted in axial contact with a lateral flange of the housing and exerting a force on one of the raceways. The pre-stressed rolling bearing further comprises at least a stiffening element comprising a radial portion axially disposed between the pre-stressing element and the associated raceway, and at least an axial portion connected to the radial portion and extending towards the lateral flange of the housing.

In one preferred embodiment, the at least axial portion of the stiffening element leaves an axial gap between its free end and the lateral flange of the housing.

In one embodiment, the stiffening element comprises an inner axial portion disposed into the bore of the pre-stressing element. Alternatively or in combination, the stiffening element may comprise an outer axial portion radially surrounding the pre-stressing element.

In one preferred embodiment, the stiffening element is made from rigid material and the pre-stressing element is made from elastic material.

Preferably, the radial portion of the stiffening element has a radial dimension larger than the one of the associated raceway.

In one embodiment, a first surface of the pre-stressing element is in axial contact with the lateral flange of the housing, the stiffening element being mounted in axial contact with an opposite second surface of said pre-stressing element. The housing may also comprise an outer axial portion connected to the lateral flange and in contact with the separate raceways.

In one embodiment, the stiffening element is annular.

Advantageously, the stiffening element is made from synthetic material or from metal. In one embodiment, the pre-stressing element is overmoulded onto the stiffening element. The pre-stressing element may be made from elastomer.

In one embodiment, the raceways comprise annular wires.

In another aspect of the invention, a steering column for an automotive vehicle comprises an outer tube, an inner shaft and at least one pre-stressed rolling bearing as previously defined mounted radially between the tube and the shaft.

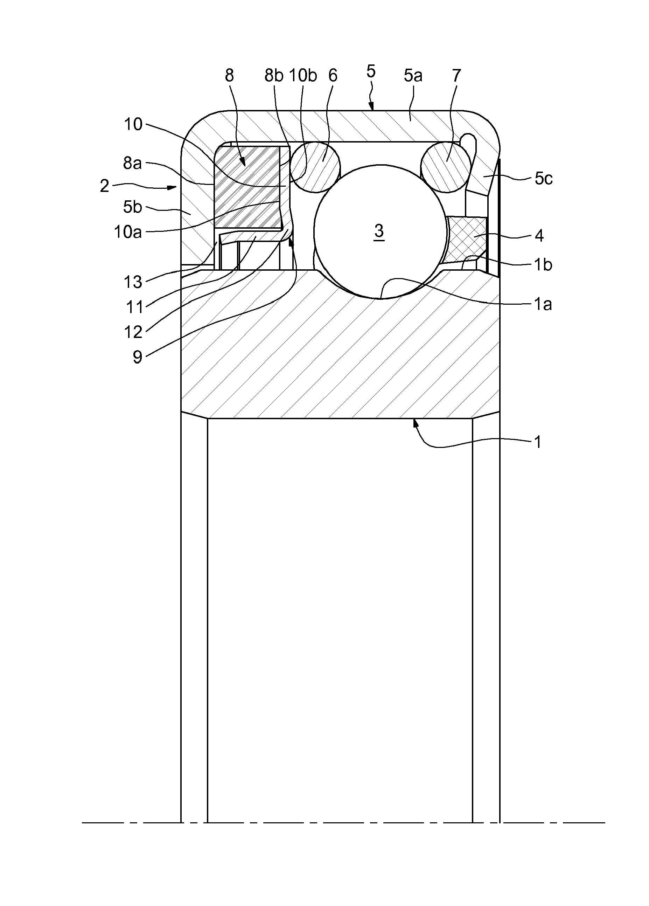

The present invention and its advantages will be better understood by studying the detailed description of specific embodiments given by way of non-limiting examples and illustrated by the appended drawings on which Figures 1 to 3 are axial half-sections of pre-stressed rolling bearings according to third examples of the invention.

As illustrated on the Figure 1, which illustrates an embodiment of a pre-stressed rolling bearing according to the invention, the bearing comprising an inner ring 1, an outer ring 2, a row of rolling elements 3, that consist in the example of balls, and a cage 4 disposed radially between the rings to maintain a regular circumferential spacing between the rolling elements.

In this example, the inner ring 1 is designed to be mounted on a rotary member. It thus constitutes the rotating ring of the bearing while the outer ring 2 constitutes the non-rotating ring. The inner ring 1 is solid and has a toroidal groove 1a provided on its exterior cylindrical surface 1b and forming a raceway for the rolling elements 3 directed radially outwards. The radius of curvature of the groove 6 is slightly greater than the radius of the rolling elements. The inner ring 1 may be manufactured by machining or by pressing a steel blank which is then ground and optionally lapped at the raceway in order to give the ring 1 its geometric characteristics and its final surface finish. In this example, the groove 1a is offset axially with respect to a radial mid-plane of the inner ring 1.

The outer ring 2 comprises an outer housing 5, two separate first and second raceways 6 and 7 for the rolling elements 3, a pre-stressing element 8 acting on one of the raceways, and a stiffening element 9 disposed between said raceway and the pre-stressing element. The stiffening element 9 is distinct from the raceways 6, 7.

The raceways 6, 7 are two separate parts which are preferably identical to reduce the manufacturing costs. The raceways 6, 7 are in the form of annular rings and are disposed inside the housing 5 in direct contact therewith. The raceways 6, 7 are formed of rolled wires whose ends are face-to-face when said raceways are fitted into the housing 5. Alternatively, each of raceways may be solid and continuous in the circumferential direction and may have a recess forming a raceway for the rolling elements 3. In another variant, the raceways may also be manufactured by cutting and stamping a metal sheet. The rolling elements 3 are positioned between the raceways 6, 7 of the outer ring 2 and the groove 1a of the inner ring 1.

The housing 5 has a generally U-shaped section and is advantageously made of stamped metal sheet. The housing 5 is annular and comprises an outer axial portion 5a and two radial lateral flanges 5b and 5c, each flange extending radially inwards one end of the outer axial portion 5a. The raceways 6, 7 are arranged in radial contact with the bore of the outer axial portion 5a and are symmetrical with respect to a radial plane passing through the centre of the rolling elements 3. The lateral flange 5c has a radial dimension smaller than the dimension of the lateral flange 5b and is also thinner to be slightly curved towards the rolling elements 3 so as to contact the raceway 7 and to axially preload the rolling bearing. The cage 4 is disposed radially between the free end of the radial flange 5c and the cylindrical surface 1b of the inner ring 1.

The pre-stressing element 8 is annular and disposed axially between the lateral flange 5b of the housing and the stiffening element 9. The pre-stressing element 8 is disposed radially between the outer axial portion 5a of the housing and the stiffening element 9, while remaining at a distance from these two elements. A radial surface 8a of the pre-stressing element 8 is in axial contact with an internal face of the lateral flange 5b of the housing, and an opposite radial surface 8b is in axial contact with the stiffening element 9. The pre-stressing element 8 remains spaced or at a distance away from the rolling elements 3. The pre-stressing element 8 is made from elastic material, for example an elastomer such as nitrile rubber or polyurethane. The pre-stressing element 8 may be obtained by moulding. In the illustrated embodiment, the pre-stressing element 8 has a toroidal form of a square cross-section. Alternatively, the pre-stressing element 8 may have a different profile in cross-section, for example circular.

The stiffening element 9 has an annular form and a generally L-shaped section. The stiffening element 9 is provided with a radial portion 10 axially disposed between the pre-stressing element 8 and the raceway 6, and with an inner axial portion 11 extending from a small-diameter edge of said radial portion towards the lateral flange 5b of the housing. The radial portion 10 and the inner axial portion 11 are connected by a rounded portion 12. The radial portion 10 is delimited axially by two radial opposite surfaces 10a, 10b. The radial surface 10a forms an abutment surface of the stiffening element against the pre-stressing element 8 and the radial surface 10b forms an abutment surface for the raceway 6. Thus, the radial portion 10 of the stiffening element is in axial contact against the raceway 6 on one side and in axial contact with the radial surface 8b of pre-stressing element 8 on the other side. The radial portion 10 has a radial dimension larger than the one of the raceway 6. The radial dimension of the radial portion 10 is substantially equal to the radial dimension of the surface 8b of the pre-stressing element.

The inner axial portion 11 of the stiffening element extends axially on the opposite side of the raceway 6 and the rolling elements 3. The axial portion 11 extends axially towards the lateral flange 5b of the housing and leaves an axial gap 13 between its free end and the internal face of the flange 5b. The inner axial portion 11 is disposed into the bore of the pre-stressing element 8 while remaining slightly distant from said bore. In the illustrated embodiment, the free end of the axial portion 11 is slightly curved inwards.

The stiffening element 9 is made from rigid material, such as synthetic material like polyamide or metal. Alternatively, the stiffening element 9 may be made from metal and advantageously may be manufactured in an economic way by cutting and stamping a metal sheet. Advantageously, the pre-stressing element 8 may be overmoulded onto the stiffening element 9 to obtain a unitary subassembly. More precisely, the pre-stressing element 8 may be overmoulded onto the radial portion 10 and the rounded portion 12 of the stiffening element.

As previously mentioned, the lateral flange 5c of the housing is curved inwards so as to contact the raceway 7. The flange 5c presses the raceway 7 so as to exert, via the rolling elements 3, the raceway 6 and the radial portion 10 of the stiffening element, an axial compression force on the pre-stressing element 8 and to preload the rolling bearing both axially and radially.

The radial portion 10 of the stiffening element forms a means for distributing the applied preload on the pre-stressing element 8. The preload is transmitted to the pre-stressing element 8 without concentrations of excessive stresses since the radial portion 10 of the stiffening element recovers the major part of the radial surface 8b of said element. With regard to a conventional preload rolling bearing having a raceway in direct contact with the pre-stressing element, the bearing surface coming into axial contact with the pre-stressing element 8 is increased in the disclosed rolling bearing according to an example of the invention. Besides, the radial dimension of the radial portion 10 of the stiffening element being substantially equal to the one of the radial surface 8b of the pre-stressing element 8, the phenomenon of creep or flow in axial direction of the material of said element is prevented. The axial portion 11 of the stiffening element prevents a radial creep of the pre-stressing element 8.

Otherwise, the stiffness of the rolling bearing is also increased by interposing, between the pre-stressing element 8 and the associated raceway 6, the stiffening element 9 made from rigid material. The stiffness of the rolling bearing is increased both axially and radially. The dislocation resistance of the rolling bearing is also enhanced.

In return of the axial compression force exerted on the pre-stressing element 8, said element exerts a permanent axial force on the associated raceway 6. The pre-stressing element 8 tends, via the raceway 6, to push and preload the row of rolling elements 3 against the raceway 7, and also against the groove 1a of the inner ring 1. The load applied therefore pre-stresses the rolling elements 3 against the groove 1a and the raceway 7. This axial load also tends to push the raceway 6 towards the bore of the axial portion 5a of the housing 5, via the rolling elements 3.

In case of external axial loads applied to the outer ring 2, the pre-stressing element 8 is axially compressed until the free end of the inner axial portion 11 of the stiffening element abuts axially against the lateral flange 5b of the housing. During the deformation of pre-stressing element 8, the axial loads are absorbed. Then, when the axial contact between the axial portion 11 and the internal face of the lateral flange 5b occurs, the axial stiffness of the rolling bearing is increased.

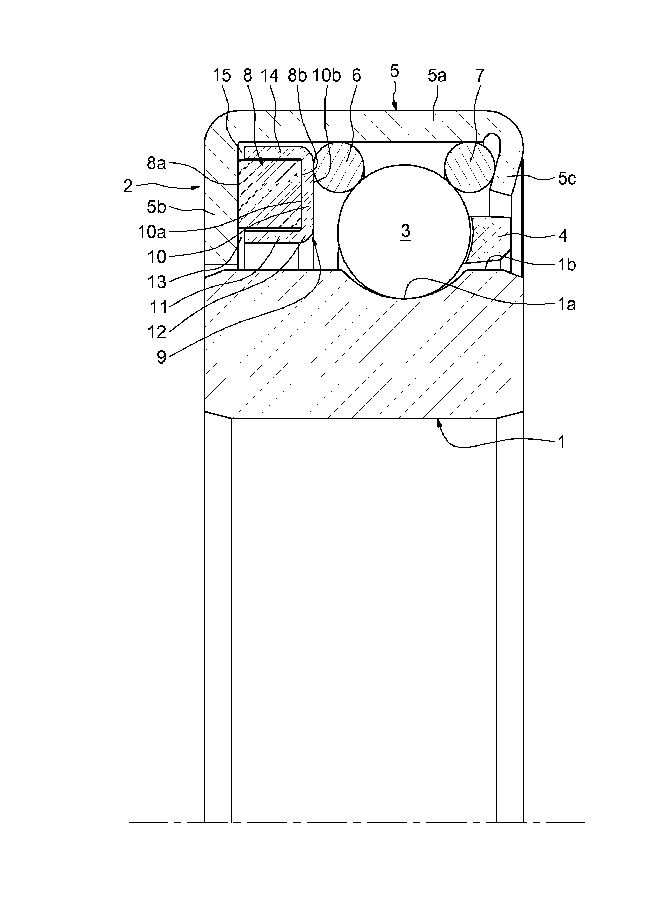

In the embodiment shown on Figure 2, in which identical parts are given identical references, the stiffening element 9 has a U-shaped section and further comprises an outer axial portion 14 extending axially from a large-diameter edge of the radial portion 10 towards the lateral flange 5b of the housing. The outer axial portion 14 leaves an axial gap 15 between its free end and the internal face of the lateral flange 5b. The axial dimension of the gap 15 is substantially the same than the one of the gap 13 between the lateral flange 5b and the inner axial portion 11. In this embodiment, the free end of the inner axial portion 11 is not curved radially inwards. The outer axial portion 14 radially surrounds the inner axial portion 11 and the pre-stressing element 8 is disposed radially between these portions. The outer axial portion 14 radially surrounds the pre-stressing element 8 and may come into radial contact with the exterior surface of said element. The outer axial portion 14 of the stiffening elements remains slightly distant from the bore of the axial portion 5a of the housing.

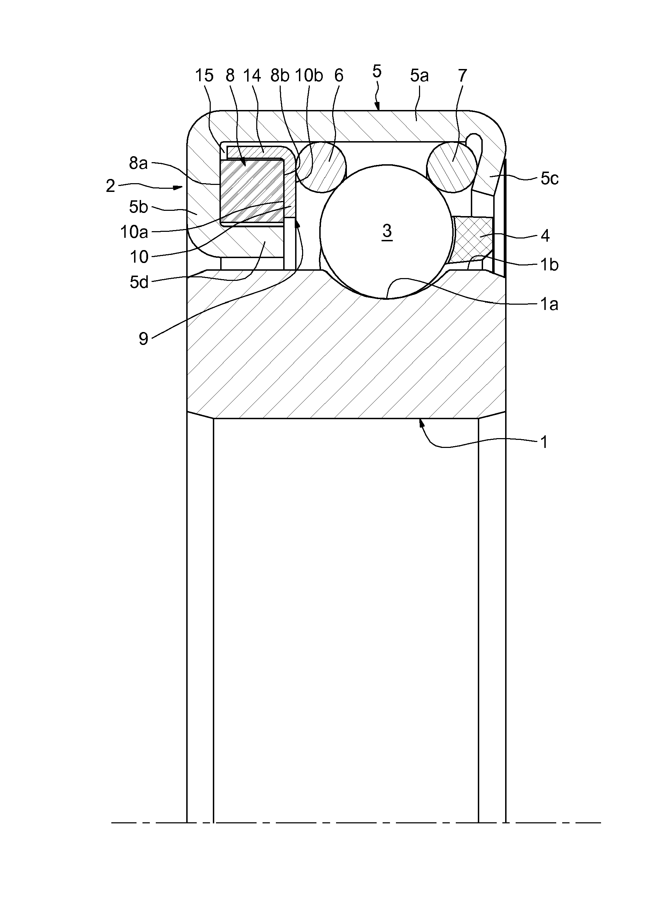

The embodiment shown on Figure 3, in which identical parts are given identical references, differs from the previous embodiment in that the stiffening element 9 has a L-shaped section and is deprived of the inner axial portion 11. In order to radially centre the pre-stressing element 8 inside the housing 5, said housing comprises an inner axial portion 5d extending axially from a small-diameter edge of the lateral flange 5b towards the rolling elements 3 while remaining distant from said rolling elements.

In the disclosed embodiments, the pre-stressing element 8 is advantageously overmoulded onto the stiffening element 9. Alternatively, the pre-stressing element 8 and the stiffening element 9 may be two separate parts.

In the described embodiments, the stiffening element 9 comprises at least an axial portion 11, 14 extending axially towards the lateral flange 5b of the housing while remaining axially distant from said flange. As previously mentioned, in case of external axial loads applied to the outer ring 2, the pre-stressing element 8 is deformed axially until the inner axial portion 11 and/or the outer axial portion 14 axially abut against the lateral flange 5b of the housing. The axial loads applied to the outer ring 2 are firstly absorbed by the pre-stressing element 8 and then the axial rigidity of the rolling bearing is increased when the inner and/or the outer axial portions axially abut against the housing. Alternatively, it could also be possible to foresee a stiffening element having one or two axial portions connected to the radial portion and extending axially towards the lateral flange 5b and coming into axial contact with said flange. However, with such a disposition, in case of external axial loads applied to the outer ring, said loads are not absorbed by the pre-stressing element.

In another variant, it could also be possible to foresee a second pre-stressing element advantageously associated with a corresponding stiffening element axially interposed between said second pre-stressing element and the associated raceway.

In the disclosed embodiment, the outer ring 2 comprises a housing 5 and two separate raceways 6, 7 and the inner ring 1 is of the solid type. Alternatively, it may be possible to foresee an arrangement with the elements inverted. In another embodiment, it could also be possible to have a rolling bearing in which the inner ring and the outer ring each comprise two separate raceways, at least a pre-stressing element and at least a stiffening element enclosed in a housing as previously described.

The interposition of a stiffening element axially between the pre-stressing element and the corresponding raceway permits to obtain a pre-stressed or preloaded rolling bearing having an increased stiffness.

## Claims

1. Pre-stressed rolling bearing comprising an inner ring (1), an outer ring (2) and a row of rolling elements (3) disposed between the rings, at least one of said rings comprising a housing (5), two raceways (6, 7) mounted in the housing and in contact with said housing, and at least a pre-stressing element (8) mounted in axial contact with a lateral flange (5b) of the housing and exerting a force on one of the raceways, **characterized in that** it further comprises at least a stiffening element (9) comprising a radial portion (10) axially disposed between the pre-stressing element (8) and the associated raceway (6), and at least an axial portion (11, 14) connected to the radial portion and extending towards the lateral flange (5b) of the housing.

2. Rolling bearing according to claim 1, wherein the at least axial portion (11, 14) of the stiffening element leaves an axial gap (13, 15) between its free end and the lateral flange (5b) of the housing.

3. Rolling bearing according to claim 1 or 2, wherein the stiffening element (9) comprises an inner axial portion (11) disposed into the bore of the pre-stressing element.

4. Rolling bearing according to any of the preceding claims, wherein the stiffening element (9) comprises an outer axial portion (14) radially surrounding the pre-stressing element.

5. Rolling bearing according to any of the preceding claims, wherein the stiffening element (9) is made from rigid material and the pre-stressing element (8) is made from elastic material.

6. Rolling bearing according to any of the preceding claims, wherein the radial portion (10) of the stiffening element has a radial dimension larger than the one of the associated raceway (6).

7. Rolling bearing according to any of the preceding claims, wherein a first surface (8a) of the pre-stressing element is in axial contact with the lateral flange (5b) of the housing, the stiffening element (9) being mounted in axial contact with an opposite second surface (8b) of said pre-stressing element.

8. Rolling bearing according to any of the preceding claims, wherein the housing (5) comprises an outer axial portion (5a) connected to the lateral flange (5b) and in contact with the separate raceways (6, 7).

9. Rolling bearing according to any of the preceding claims, wherein the stiffening element (9) is annular.

10. Rolling bearing according to any of the preceding claims, wherein the stiffening element (9) is made from synthetic material or from metal.

11. Rolling bearing according to any of the preceding claims, wherein the pre-stressing element (8) is overmoulded onto the stiffening element (9).

12. Rolling bearing according to any of the preceding claims, wherein the pre-stressing element (8) is made from elastomer.

13. Rolling bearing according to any of the preceding claims, wherein the raceways (6, 7) comprise annular wires.

14. Steering column for an automotive vehicle comprising an outer tube, an inner shaft and at least one pre-stressed rolling bearing according to any of the preceding claims mounted radially between the tube and the shaft.
